Europäisches Patentamt

European Patent Office

Office européen des brevets

(19)

(11) EP 1 729 258 A2

(12) EUROPÄISCHE PATENTANMELDUNG

(43) Veröffentlichungstag:
06.12.2006 Patentblatt 2006/49

(51) Int Cl.:
G06T 7/20 (2006.01)          H04N 5/14 (2006.01)
H04N 7/26 (2006.01)

(21) Anmeldenummer: 06005697.5

(22) Anmeldetag: 21.03.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 03.06.2005 DE 102005025634

(71) Anmelder: Micronas GmbH
79108 Freiburg (DE)

(72) Erfinder:
• Hahn, Marko
85579 Neubiberg (DE)
• Rieder, Peter, Dr.
81737 München (DE)
• Scheffler, Günter
80939 München (DE)

(74) Vertreter: Bickel, Michael
Westphal - Mussgnug & Partner
Patentanwälte
Mozartstrasse 8
80336 München (DE)

(54) **Verfahren und Vorrichtung zur Ermittlung von Bewegungsvektoren**

(57) Die Erfindung betrifft ein Verfahren und eine Vorrichtung zur Ermittlung von Bewegungsvektoren, die einzelnen Bildbereichen eines Bildes zugeordnet sind, wobei das Bild in eine Anzahl Bildblöcke unterteilt ist. Das Verfahren sieht die Durchführung eines Bewegungsschätzverfahrens, um jedem der Bildblöcke wenigstens einen Bewegungsvektor zuzuordnen, und die Erzeugung eines modifizierten Bewegungsvektors (V11') zu wenigstens einem ersten Bildblock (11) unter Verwendung folgender Verfahrensschritte vor:
- Ermitteln wenigstens eines zweiten Bildblocks (12, 13), durch den der dem ersten Bildblock (11) zugeordnete Bewegungsvektor (V11) wenigstens teilweise verläuft,
- Erzeugen des modifizierten Bewegungsvektors (V11') abhängig von dem wenigstens einem zweiten Bildblock (12, 13) zugeordneten Bewegungsvektor (V12, V13),
- Zuordnen des modifizierten Bewegungsvektors (V11') als Bewegungsvektor zu dem ersten Bildblock (11).

FIG 2

EP 1 729 258 A2

## Beschreibung

Die vorliegende Erfindung betrifft ein Verfahren und eine Vorrichtung zur Ermittlung von Bewegungsvektoren, die jeweils einzelnen Bildbereichen in einem Bild zugeordnet sind.

In der Bildverarbeitung ist es bekannt, jeweils einzelnen Bildbereichen eines Bildes, das Teil einer Bildfolge ist, Bewegungsvektoren zuzuordnen. Diese Bewegungsvektoren geben jeweils eine Verschiebung der Position dieses Bildbereiches gegenüber einer Position dieses Bildbereiches in einem vorherigen oder nachfolgenden Bild der Bildfolge an. Nützlich ist die hierdurch erhaltene Bewegungsinformation beispielsweise bei der Erzeugung eines oder mehrerer Zwischenbilder, die zeitlich zwischen den Bildern der Bildfolge liegen, um die Position sich bewegender Objekte in den Zwischenbildern korrekt, d.h. bewegungsrichtig darstellen zu können. Die Bewegungsinformation zu einem sich über mehrere aufeinanderfolgende Bilder bewegenden Objekt oder Bildbereich kann darüber hinaus auch für eine komprimierte Abspeicherung von Bilddaten aufeinanderfolgender Bilder verwendet werden. Des weiteren kann die Bewegungsinformation zu einem sich bewegenden Objekt auch für eine Zwischenzeileninterpolation verwendet werden.

Bewegungsvektoren können auch Bildblöcken eines zu interpolierenden Zwischenbildes zugeordnet sein. Der Bewegungsvektor eines Bildblocks eines Zwischenbilds gibt in diesem Fall an, von welcher Bildposition in dem vorherigen Bild der Bildfolge zu welcher Bildposition in dem nachfolgenden Bild der Bildfolge sich der Inhalt dieses Bildblockes bewegt.

Ein mögliches von mehreren Verfahren zur Erzeugung von Bewegungsvektoren ist das sogenannte Blockmatching-Verfahren, das beispielsweise in Schröder, H.; Blume, H.: "Mehrdimensionale Signalverarbeitung", Band 2, ISBN 3-519-06197-X, Seite 259-266 beschrieben ist. Bei diesem Verfahren wird das aktuelle Bild einer Bildfolge in eine Anzahl gleich großer Blöcke unterteilt. Zu jedem dieser Blöcke wird dann im vorherigen oder nachfolgenden Bild ein Block gleicher Größe gesucht, dessen Bildinhalt die größte Übereinstimmung mit dem Inhalt des jeweiligen Blockes des aktuellen Bildes aufweist. Der Verschiebungsvektor zwischen diesem Block des aktuellen Bildes und dem Block des vorherigen oder nachfolgenden Bildes, der die größten Übereinstimmungen mit diesem Block des aktuellen Bildes aufweist, bildet dann den Bewegungsvektor zu diesem Block des aktuellen Bildes.

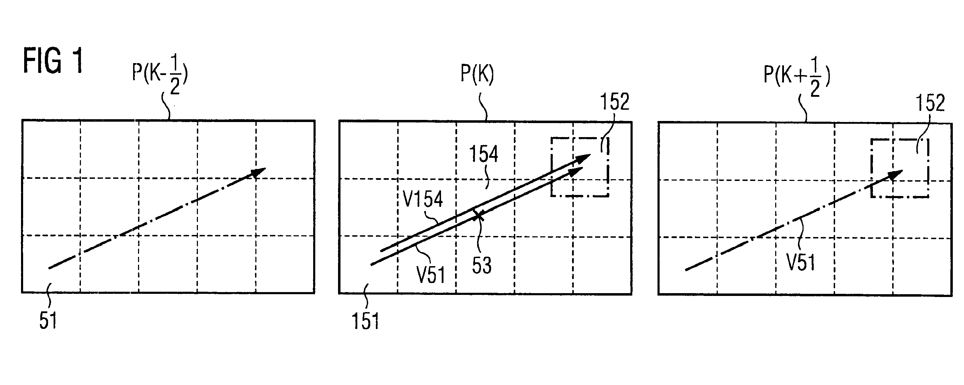

Zum besseren Verständnis wird ein solches Schätzverfahren zur Ermittlung von Bewegungsvektoren nachfolgend anhand von Figur 1 erläutert.

Figur 1 veranschaulicht eine Bildfolge mit einem ersten Bild P(k-1/2) und einem zweiten Bild P(k+1/2), die zeitlich oder räumlich aufeinanderfolgen, und mit einem zeitlich oder räumlich zwischen dem ersten und zweiten Bild liegenden zu interpolierenden Zwischenbild P(k).

Zur Durchführung einer Bewegungsschätzung wird das erste Bild P(k-1/2) unter Verwendung eines Blockrasters, das gestrichelt symbolisiert ist, in eine Anzahl Bildblöcke unterteilt, von denen in Figur 1 einer mit dem Bezugszeichen 51 bezeichnet ist. Jeder dieser Bildblöcke umfasst eine Bildpunktmatrix mit einer Anzahl von Bildpunkten, beispielsweise 4 x 8 Bildpunkten. Unter Verwendung eines geeigneten Suchalgorithmus wird zu jedem Block des ersten Bildes P(k-1/2) derjenige Bildblock derselben Größe in dem zweiten Bild P(k+1/2) ermittelt, der mit dem jeweiligen Bildblock des ersten Bildes die größten Übereinstimmungen aufweist. Mit dem Bezugszeichen 52 ist in Figur 1 ein solcher zu dem Bildblock 51 des ersten Bildes korrespondierender Bildblock in dem zweiten Bild P(k+1/2) bezeichnet.

Diese Suche nach dem korrespondierenden Bildblock 52 in dem zweiten Bild, ist nicht notwendigerweise an das Blockraster gebunden, so dass die Position des korrespondierenden Bildblocks außerhalb des für das erste Bild P(k-1/2) vorgegebenen Blockrasters liegen kann. Die Suche nach dem korrespondierenden Bildblock in dem zweiten Bild kann mit einer Auflösung von einem Bildpunkt erfolgen.

Das zu interpolierende Zwischenbild P(k) wird zu Zwecken der Interpolation unter Verwendung eines Blockrasters, das dem Blockraster des ersten Bildes P(k-1/2) entsprechen kann, ebenfalls in eine Anzahl Bildblöcke unterteilt, denen jeweils ein Bewegungsvektor zugeordnet wird. Mit dem Bezugszeichen 154 ist in Figur 1 ein solcher Bildblock bezeichnet. Das Bezugszeichen V154 bezeichnet einen diesem Bildblock zugeordneten Bewegungsvektor. Der Bildinhalt dieses Bildblocks 154 kann unter Verwendung des Bewegungsvektors interpoliert werden, indem zunächst der Bildblock ermittelt wird, der sich in dem ersten Bild P(k-1/2) an der Position des Anfangspunktes des Bewegungsvektors V154 befindet und indem in dem zweiten Bild P(k+1/2) der Bildblock ermittelt wird, der sich an der Position des Endpunktes des Bewegungsvektors V154 befindet. Der Bildinhalt des Bildblockes 154 des zu interpolierenden Zwischenbildes P(k) kann dann unter Verwendung der Bildinformationen dieser Bildblöcke des ersten und zweiten Bildes P(k-1/2), P(k+1/2) interpoliert werden.

Bei der Zuordnung von Bewegungsvektoren zu den einzelnen Bildblöcken 154 des Zwischenbildes ist die zeitliche oder räumliche Lage des Zwischenbildes P(k) zwischen dem ersten und zweiten Bild zu berücksichtigen. Für diese Zuordnung von Bewegungsvektoren zu den Bildblöcken des Zwischenbildes werden beispielsweise die für die einzelnen Bildblöcke des ersten Bildes P(k-1/2) ermittelten Bewegungsvektoren V51 in das Zwischenbild projiziert und für jeden dieser Bewegungsvektoren V51 wird ein auf dem Bewegungsvektor V51 liegender Bildpunkt 53 ermittelt, dessen örtliche Position zwischen dem Anfangs- und dem Endpunkt des Bewegungsvektors V51 der zeitlichen oder örtlichen Position des Zwischenbildes P(k) zwischen dem ersten und zweiten Bild P(k-1/2), P(k+1/2) entspricht. Liegt das Zwischenbild P(k) zeitlich beispielsweise in der Mitte zwischen dem ersten und zweiten Bild P(k-1/2), P(k+1/2) so wird der Bildpunkt ermittelt, der in der Mitte des Bewegungsvektors liegt, wie dies in Figur 1 dargestellt ist.

Dem Bildblock 154, in dem dieser ermittelte Bildpunkt 53 liegt, wird dann der Bewegungsvektor V51 als Bewegungsvektor V154 des Bildblockes zugeordnet. Dieser Bewegungsvektor V154 ist in Figur 1 als ein durch den Mittelpunkt des Bildblockes gehender Bewegungsvektor V154 dargestellt.

Beim Bewegungsschätzverfahren nach dem sogenannten Full-Search-Algorithmus wird hierbei jeder Block des aktuellen Bildes mit jedem möglichen Block des vorherigen oder nachfolgenden Bildes verglichen, um die Bewegungsvektoren der einzelnen Bereiche zu ermitteln. Zur Reduzierung des erheblichen Rechenaufwandes, der beim Full-Search-Algorithmus erforderlich ist, sind weiterhin prädiktive Schätzverfahren bekannt, bei denen bei der Ermittlung des Bewegungsvektors zu einem Block Bewegungsinformationen aus vorherigen Bewegungsschätzungen berücksichtigt werden.

Bei optimierten Suchverfahren werden jedem Block nur eine Anzahl von Auswahlvektoren oder Kandidatenvektoren zugeordnet. Unter Verwendung dieser Auswahl- oder Kandidatenvektoren wird dabei ein Bildvergleich durchgeführt, um anhand des Vergleichsergebnisses anschließend einen dieser Vektoren auszuwählen und dem Block zuzuordnen. Solche Verfahren sind in Schröder, H.; Blume, H.: "Mehrdimensionale Signalverarbeitung", Band 2, ISBN 3-519-06197-X, Seiten 266-289 beschrieben.

Ein weiteres optimiertes Suchverfahren unter Verwendung von Kandidatenvektoren ist beispielsweise in der US 6,782,054 beschrieben.

Die Qualität der Bewegungsschätzung mittels Blockschätzverfahren ist wesentlich von der Blockauflösung, d.h. der Größe der einzelnen Blöcke abhängig. Die Qualität ist dabei umso größer je kleiner die einzelnen Blöcke sind, je besser die Auflösung des Bildes in einzelnen Blöcken also ist und je mehr Bewegungsvektoren pro Bild somit ermittelt werden. Umgekehrt steigt allerdings auch der Rechenaufwand mit kleiner werdender Blockgröße. Allerdings steigt auch die Fehleranfälligkeit für Schätzfehler bei kleiner werdenden Blockgrößen. Das Optimum der Blockgröße liegt daher bei ca. 4x8 (Zeilen x Pixel). Allerdings entstehen bei Blöcken dieser Größe deutlich erkennbare Blockstrukturen bei der Bildverarbeitung. Bewegt sich beispielsweise ein rundes Objekt in dem Bild vor einem Hintergrund, so kann es durch die Blockschätzung zu erkennbaren Kanten an der Grenze des Objekts zu dem Hintergrund kommen.

Zur Erhöhung der Auflösung bei der Ermittlung von Bewegungsvektoren ist es aus der US 5,148,269 bekannt, das Bild in eine vorgegebene Anzahl von Hauptblöcken zu unterteilen und zunächst eine Blockschätzung durchzuführen, um jedem dieser Hauptblöcke einen Bewegungsvektor zuzuordnen. Jeder einzelne Hauptblock wird dann in eine Anzahl Unterblöcke unterteilt, denen jeweils ein Bewegungsvektor zugeordnet wird. Zur Erzeugung der Bewegungsvektoren der Unterblöcke werden hierbei der Bewegungsvektor des jeweiligen Hauptblockes und die Bewegungsvektoren der benachbart zu dem Hauptblock liegenden weiteren Hauptblöcke herangezogen.

Ein weiteres Problem bei der Ermittlung von Bewegungsvektoren besteht darin, dass ein Bewegungsvektor nur solchen Bildbereichen bzw. Objekten zugeordnet werden kann, die in den aufeinanderfolgenden Bildern tatsächlich vorhanden sind. Betrachtet sei der Fall einer Bildfolge mit einem Objekt, das sich in Richtung eines Randes des Bilden bewegt und das in einem ersten Bild der Bildfolge noch vorhanden ist, während es in einem zeitlich nachfolgenden zweiten Bild nicht mehr vorhanden ist. Eine Bewegungsschätzung unter Anwendung eines Blockschätzverfahrens führt in diesem Fall mit hoher Wahrscheinlichkeit zu einem Fehler. Gleiches gilt dann, wenn eine Bildfolge sich bewegende Objekte zeigt, die zeitweise durch andere Objekte in der Bildfolge überdeckt werden.

Besonders schwierig ist eine Bewegungsschätzung dann, wenn die Bildfolge sich gegenläufig bewegende Objekte aufweist die sich zusätzlich noch zeitweise überdecken.

Ziel der vorliegenden Erfindung ist es, ein verbessertes Verfahren zur Ermittlung von Bewegungsvektoren, die einzelnen Bildbereichen eines zu interpolierenden Bildes zugeordnet sind, und eine Vorrichtung zur Ermittlung von Bewegungsvektoren zur Verfügung zu stellen.

Dieses Ziel wird durch ein Verfahren nach Anspruch 1 und durch eine Vorrichtung nach Anspruch 16 erreicht. Vorteilhafte Ausgestaltungen sind Gegenstand der Unteransprüche.

Das Verfahren sieht vor, das zu interpolierende Bild in eine Anzahl Bildblöcke zu unterteilen und ein Bewegungsschätzverfahren durchzuführen, um zu jedem der Bildblöcke wenigstens einen Bewegungsvektor zur Verfügung zu stellen. Das hierfür verwendete Bewegungsschätzverfahren kann ein herkömmliches, insbesondere eines der eingangs erläuterten, Bewegungsschätzverfahren sein.

Basierend auf den den einzelnen Bildblöcken zugeordneten Bewegungsvektoren sieht das Verfahren vor, zu jedem Bildblock einen modifizierten Bewegungsvektor zu erzeugen. Hierzu wird wenigstens ein weiterer Bildblock ermittelt, den der dem jeweiligen Bildblock zugeordnete Bewegungsvektor wenigstens teilweise durchläuft, und der modifizierte Bewegungsvektor wird abhängig vom Bewegungsvektor erzeugt, der diesem wenigstens einen weiteren Bildblock zugeordnet ist.

Bei dem Verfahren können zur Erzeugung des modifizierten Bewegungsvektors eines bestimmten Bildblocks somit auch Bewegungsinformationen herangezogen werden, die zu anderen Bildblöcken ermittelt wurden. Die Position dieser Bildblöcke, deren Bewegungsinformation berücksichtigt wird, ist dabei abhängig von dem Bewegungsvektor, der zu dem bestimmten Bildblock zunächst ermittelt wurde. Die Bewegungsinformation anderer Bildblöcke fließt nur bei solchen Bildblöcken in die Ermittlung des modifizierten Bewegungsvektors ein, bei denen der zunächst ermittelte Bewegungsvektor über die Grenzen dieses Bildblocks zeigt.

Für die Erzeugung des modifizierten Bewegungsvektors zu einem Bildblock besteht die Möglichkeit, alle Bildblöcke, durch die der Bewegungsvektor dieses Bildblockes verläuft, zu ermitteln und die Bewegungsvektoren aller dieser Bildblöcke einer Filterung, insbesondere einer Tiefpassfilterung zu unterziehen, um den modifizierten Bewegungsvektor zu erhalten.

Das erläuterte Vorgehen, eignet sich auch zur Erhöhung der Auflösung bei der Bewegungsschätzung. Ausgehend von einer Unterteilung des Bildes in Bildblöcke und einer Zuordnung wenigstens eines Bewegungsvektors zu jedem der Bildblöcke, sieht dieses Verfahren vor, jeden der Bildblöcke in Unterblöcke zu unterteilen und jedem der Bildblöcke zunächst den Bewegungsvektor des Bildblocks zuzuordnen. Anschließend wird für jeden Unterblock wenigstens ein weiterer Bildblock oder Unterblock ermittelt, den der Bewegungsvektor dieses Unterblocks durchläuft, und ein modifizierter Bewegungsvektor wird abhängig von dem Bewegungsvektor des wenigstens teilweise durchlaufenen Bildblocks oder Unterblocks ermittelt. Der modifizierte Bewegungsvektor wird dann dem jeweiligen Unterblock als Bewegungsvektor zugeordnet.

Dieses Verfahren kann wiederholt durchgeführt werden, indem jeder Unterblock, zu dem ein modifizierter Bewegungsvektor erzeugt wurde, weiter in kleinere Unterblöcke unterteilt wird, und indem die zuvor erläuterten Schritte zur Erzeugung eines modifizierten Bewegungsvektors für jeden dieser kleineren Unterblöcke durchgeführt werden.

Die vorliegende Erfindung wird nachfolgend anhand von Figuren näher erläutert.

Figur 1     veranschaulicht ein bekanntes Verfahren zur Ermittlung eines Bewegungsvektors zu einem Bildblock eines Bildes.

Figur 2     zeigt einen Ausschnitt eines in Bildblöcke unterteilten Bildes zur Erläuterung einer Ausführungsvariante des erfindungsgemäßen Verfahrens.

Figur 3     zeigt einen Abschnitt eines in Bildblöcke unterteilten Bildes zur Erläuterung einer zweiten Ausführungsvariante des erfindungsgemäßen Verfahrens.

Figur 4     zeigt einen Ausschnitt eines in Bildblöcke unterteilen Bildes und ein Diagramm mit Beträgen der den einzelnen Bildblöcken zugeordneten Bewegungsvektoren zur Erläuterung des erfindungsgemäßen Verfahrens.

Figur 5     zeigt einen Ausschnitt eines in Bildblöcke unterteilten Bildes mit zwei sich gegenläufig bewegenden Bildbereichen.

Figur 6     veranschaulicht die Verwendung des erfindungsgemäßen Verfahrens zur Erhöhung der Auflösung bei der Bewegungsschätzung.

Figur 7     zeigt schematisch eine Vorrichtung zur Durchführung des erfindungsgemäßen Verfahrens.

In den Figuren bezeichnen, sofern nicht anders angegeben, gleiche Bezugszeichen gleiche Teile mit gleicher Bedeutung.

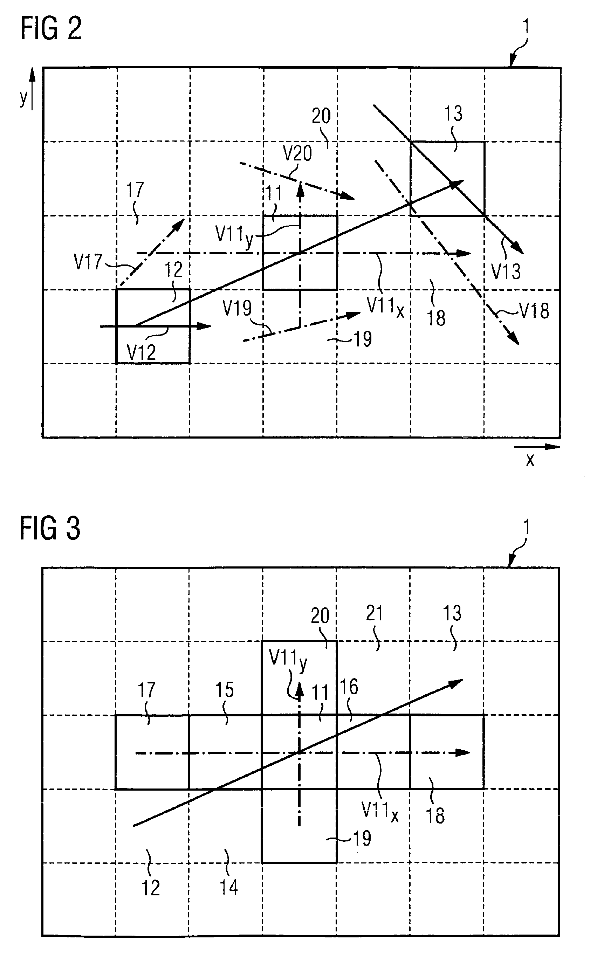

Figur 2 zeigt schematisch einen Ausschnitt eines in einzelne Bildblöcke unterteilten Bildes 1, bei dem den einzelnen Bildblöcken jeweils Bewegungsvektoren zugeordnet sind. Die Unterteilung des Bildes 1 in einzelne Bildblöcke ist in Figur 2 gestrichelt dargestellt. Von diesen Bildblöcken werden zu Zwecken der Erläuterung nachfolgend drei Bildblöcke 11, 12, 13 näher betrachtet. Diese Bildblöcke 11, 12, 13 sind in Figur 2 mit durchgezogenen Linien dargestellt.

Den einzelnen Bildblöcken des Bildes 1 ist jeweils wenigstens ein Bewegungsvektor zugeordnet. In Figur 2 sind dabei lediglich die Bewegungsvektoren V11, V12, V13 der betrachteten Bildblöcke 11, 12, 13 dargestellt. Auf eine Darstellung der Bewegungsvektoren der übrigen Bildblöcke wurde aus Gründen der Übersichtlichkeit verzichtet.

Das dargestellte Bild 1 ist in nicht näher dargestellter Weise Teil einer Bildfolge mit mehreren aufeinanderfolgenden Bildern. Das Bild 1 ist beispielsweise ein zeitlich oder räumlich zwischen zwei Bildern liegendes zu interpolierendes Zwischenbild. Der einem Bildblock zugeordnete Bewegungsvektor enthält dabei die Information, welche Bildblöcke dieser zwei Bilder zur Interpolation des Bildinhaltes des Bildblocks des Zwischenbildes herangezogen werden sollen. Der einem Bildblock 11, 12, 13, und damit allen Bildpunkten eines Bildblockes zugeordnete Bewegungsvektor V11, V12, V13 ist in Figur 2 als ein durch den Mittelpunkt des jeweiligen Bildblockes verlaufender Bewegungsvektor dargestellt. Zu Zwecken der Erläuterung wird angenommen, dass das Bild 1 ein Zwischenbild ist, das zeitlich oder räumlich in der Mitte zwischen zwei Bildern zu interpolieren ist. Der Mittelpunkt des Bildblockes 11, 12, 13, dem der jeweilige Bewegungsvektor V11, V12, V13 zugeordnet ist, liegt dabei in der Mitte des jeweiligen Bewegungsvektors V11, V12, V13.

Die Ermittlung der den einzelnen Bildblöcken zugeordneten Bewegungsvektoren kann mittels herkömmlicher Bewegungsschätzverfahren erfolgen, die dazu ausgebildet sind, einzelnen Bildblöcken eines Bildes Bewegungsvektoren zuzuordnen.

Diese Bewegungsschätzung, die zu dem Bewegungsvektor V11 geführt hat, kann allerdings fehlerbehaftet sein. Bei dem erfindungsgemäßen Verfahren ist nun vorgesehen, die den einzelnen Bildblöcken eines Bildes zugeordneten Bewegungsvektoren weiter zu verarbeiten, um die Auswirkungen möglicher Fehler bei der zuvor erfolgten Bewegungsschätzung zu verringern. Das erfindungsgemäße Verfahren sieht vor, zu jedem Bildblock einen modifizierten Bewegungsvektor zu ermitteln, was nachfolgend für einen ersten Bildblock 11 in Figur 2 erläutert wird.

Diesem ersten Bildblock 11 ist ein erster Bewegungsvektor V11 zugeordnet, der einen Anfangspunkt und einen Endpunkt besitzt, wobei der Endpunkt des Bewegungsvektors V11 in Figur 2 durch eine Spitze gekennzeichnet ist. Der Anfangspunkt des ersten Bewegungsvektors V11 liegt in dem Beispiel außerhalb des ersten Bildblockes 11 in einem zweiten Bildblock 12, während das Ende des Bewegungsvektors V11 außerhalb des Bildblockes 11 in einem dritten Bildblock 13 liegt.

Bei dem erfindungsgemäßen Verfahren ist vorgesehen, den modifizierten Bewegungsvektor zu dem ersten Bewegungsvektor V11 abhängig von dem Bewegungsvektor wenigstens eines weiteren Bildblockes, den der erste Bewegungsvektor wenigstens teilweise durchläuft, zu erzeugen.

Bei dem in Figur 2 dargestellten Verfahren ist hierzu vorgesehen, den modifizierten Bewegungsvektor unter Verwendung der Bewegungsvektoren V12, V13 der am Anfang und Ende des Bewegungsvektors V11 liegenden zweiten und dritten Bildblöcke zu erzeugen. Die Erzeugung dieses modifizierten Bewegungsvektors kann beispielsweise durch Bildung des Mittelwertes der diesen Bildblöcken 12, 13 zugeordneten Bewegungsvektoren V12, V13 erfolgen.

Die einzelnen Bewegungsvektoren besitzen jeweils eine horizontale Komponente bzw. x-Komponente und eine vertikale Komponente bzw. y-Komponente. Diese x- und y-Komponenten der einzelnen Bewegungsvektoren werden nachfolgend durch die Indizes x bzw. y bezeichnet. Die einzelnen Komponenten der Vektoren sind nachfolgend in Klammern angegeben, so dass sich die Komponentenschreibweise beispielsweise des Vektors V11 wie folgt darstellt: $(V11_x, V11_y)$.

Bei Anwendung einer Mittelwertbildung zur Erzeugung eines modifizierten Bewegungsvektors V11' zu dem Bildblock 11 gilt dann:

$$V11'_x = (V12_x + V13_x)/2 \qquad\qquad (1a)$$

$$V11'_y = (V12_y + V13_y)/2 \qquad\qquad (1b).$$

Mit $V11'_x$ und $V11'y$ sind dabei die Komponenten des modifizierten Bewegungsvektors und mit $V12_x$, $V12_y$, $V13_x$, $V13_y$ sind die Komponenten der ersten und zweiten Bewegungsvektoren V12, V13 bezeichnet.

Bei einer alternativen Ausgestaltung des Filterverfahrens ist vorgesehen, den dem ersten Bildblock 11 zugeordneten ersten Bewegungsvektor V11 in seine beiden Bewegungskomponenten $V11_x$, $V11_y$ zu zerlegen und die oben erläuterte Erzeugung eines modifizierten Bewegungsvektors komponentenweise vorzunehmen, was nachfolgend ebenfalls anhand von Figur 2 erläutert wird.

Die beiden Komponenten $V11_x$, V11y des ersten Bewegungsvektors V11 sind in Figur 2 strichpunktiert dargestellt. Die x-Bewegungskomponente $V11_x$ des Bewegungsvektors V11 verläuft von einem Bildblock 17, der den Anfangs-Bildblock der x-Bewegungskomponente bildet, zu einem Bildblock 18, der den End-Bildblock dieser x-Komponente $V11_x$ bildet. Die y-Bewegungskomponente V11y des Bewegungsvektors V11 verläuft von einem Bildblock 19, der den Anfangs-Bildblock der y-Bewegungskomponente bildet, zu einem Bildblock 20, der den End-Bildblock dieser y-Komponente $V11_y$ bildet.

Ein modifizierter Bewegungsvektor V11" wird bei diesem Verfahren komponentenweise ermittelt wobei für die Ermittlung einer x-Komponente $V11''_x$ dieses modifizierten Bewegungsvektors V11'' nur die x-Komponenten der Bewegungsvektoren solcher Blöcke herangezogen werden, durch welche die x-Bewegungskomponente des Bewegungsvektors V11 verläuft. Entsprechend werden für die Ermittlung der y-Komponente V11''y des modifizierten Bewegungsvektors V11" nur die y-Komponenten der Bewegungsvektoren solcher Blöcke herangezogen, durch welche die y-Bewegungskomponente des Bewegungsvektors V11 verläuft.

Für den Fall, dass zur Erzeugung des modifizierten Bewegungsvektors der Mittelwert der jeweiligen Komponenten der Bewegungsvektoren der Anfangs- und End-Bildblöcke verwendet wird, gilt für die Komponenten dieses modifizierten Bewegungsvektors V11":

$$V11''_x = (V17_x + V18_x)/2 \qquad (2a)$$

$$V11''_y = (V19_y + V20_y)/2 \qquad (2b).$$

Mit $V17_x$ und $V18_x$ sind dabei die x-Komponenten der Bewegungsvektoren der Anfangs- und Endbildblöcke 17, 18 der x-Komponente des Vektors V11 bezeichnet, und mit $V19_y$ und $V20_y$ sind die y-Komponenten der Bewegungsvektoren der Anfangs- und Endbildblöcke 19, 20 der y-Komponente des Vektors V11 bezeichnet.

Aus Gründen der Übersichtlichkeit ist in Figur 2 auf eine Darstellung der Bewegungsvektoren V17, V18, V19, V20 in x-und y-Komponenten allerdings verzichtet worden.

Das erläuterte Verfahren wird vorzugsweise zu jedem der Bildblöcke des Bildes 1 durchgeführt, um zu jedem Bildblock einen modifizierten Bewegungsvektor zu erzeugen. Die modifizierten Bewegungsvektoren können in entsprechender Weise wie die anhand herkömmlicher Bewegungsschätzverfahren ermittelten Bewegungsvektoren zur weiteren Bildverarbeitung genutzt werden. Diese weiteren Bildverarbeitungsmaßnahmen umfassen beispielsweise einen Zwischenbildinterpolation. Bewegungsvektoren können darüber hinaus in bekannter Weise auch zur Zwischenzeileninterpolation verwendet werden.

Neben der zuvor erläuterten einfachen Mittelwertbildung der Bewegungsvektoren des Anfang- und End-Bildblocks können zur Erzeugung des modifizierten Bewegungsvektors auch komplexere Filterverfahren verwendet werden, wie nachfolgend anhand von Figur 3 erläutert wird.

Figur 3 zeigt den bereits anhand von Figur 2 erläuterten Ausschnitt eines in Bildblöcke aufgeteilten Bildes 1, bei dem den einzelnen Bildblöcken jeweils Bewegungsvektoren zugeordnet sind. Anhand dieser Figur wird nachfolgend die Erzeugung eines modifizierten Bewegungsvektors zu dem ersten Bildblock 11, dem der Bewegungsvektor V11 zugeordnet ist, erläutert. Bei diesem Verfahren ist vorgesehen, zunächst alle Bildblöcke zu ermitteln, die der erste Bewegungsvektor V11 des ersten Bildblocks 11 wenigstens teilweise durchläuft bzw. überstreicht. In dem dargestellten Beispiel liegt der Anfangspunkt des Bewegungsvektors V11 in einem Bildblock 12, der damit den Anfangs-Bildblock des Bewegungsvektors V11 bildet. Der Endpunkt des Bewegungsvektors V11 liegt in einem Bildblock 13, der damit den End-Bildblock dieses Bewegungsvektors V11 bildet. Neben diesen Anfang- und End-Bildblöcken 12, 13 und dem Bildblock 11, dem dieser Bewegungsvektor V11 zugeordnet ist, verläuft der Bewegungsvektor V11 in dem Beispiel durch weitere Bildblöcke 14, 15, 16, 21, denen jeweils Bewegungsvektoren V14, V15, V16, V21 zugeordnet sind, die aus Gründen der Übersichtlichkeit in Figur 3 jedoch nicht dargestellt sind.

Bei dem Verfahren zur Ermittlung eines modifizierten Bewegungsvektors V11' zu dem Bildblock 11 ist vorgesehen, den modifizierten Bewegungsvektor abhängig von den Bewegungsvektoren der Bildblöcke 12, 13, 14, 15, 16, 21, durch welche der Bewegungsvektor V11 verläuft, zu erzeugen. Allgemein gilt dabei:

$$V11' = f(V11, V12, V13, V14, V15, V16, V21) \qquad (3).$$

Mit f(.) ist dabei eine Filterfunktion bezeichnet. Diese Filterung ist vorzugsweise eine Tiefpassfilterung, die im einfachsten Fall eine Mittelwertbildung sein kann. Ebenso geeignet sind nichtlineare Filter, wie beispielsweise statistische Filter (Minimum/Maximum-Filter, Medianfilter, etc.). Bei dieser Filterung können die Bewegungsvektoren aller Bildblöcke herangezogen werden, durch die der Bewegungsvektor verläuft. Es besteht allerdings auch die Möglichkeit, nur die Bewegungsvektoren von einigen ausgewählten Bildblöcken heranzuziehen. Zu den Bildblöcken, durch die der Bewegungsvektor V11 verläuft, gehören im Zusammenhang mit der Erfindung auch der erste Bildblock 11, dem der erste Bewegungsvektor V11 zugeordnet ist, und die Anfangs- und End-Bildblöcke. Der erste Bewegungsvektor V11 kann bei der Erzeugung des modifizierten Bewegungsvektors ebenfalls berücksichtigt werden.

Die Filterung der Bewegungsvektoren zur Erzeugung des modifizierten Bewegungsvektors erfolgt komponentenweise, wobei in bereits erläuterter Weise nach zwei unterschiedlichen Verfahren vorgegangen werden kann.

Bei einem ersten Verfahren ist vorgesehen, die Bildblöcke zu ermitteln, durch welche der Bewegungsvektor V11 des Bildblocks verläuft. Für die Erzeugung der x-Komponente $V'_x$ des modifizierten Bewegungsvektors werden dabei nur die x-Komponenten der diesen Bildblöcken zugeordneten Bewegungsvektoren verwendet, und für die Erzeugung der y-Komponente $V'_y$ des modifizierten Bewegungsvektors werden dabei nur die y-Komponenten der diesen Bildblöcken zugeordneten Bewegungsvektoren verwendet. Für das Beispiel in Figur 3 gilt in diesem Fall:

$$V11'_x = f(V11_x, V12_x, V13_x, V14_x, V15_x, V16_x, V21_x) \quad (4a)$$

$$V11'_y = f(V11_y, V12_y, V13_y, V14_y, V15_y, V16_y, V21_y) \quad (4b).$$

Bei einem zweiten Verfahren zur Ermittlung der x- und y-Komponenten des modifizierten Bewegungsvektors V11' des Bildblockes 11 ist vorgesehen, den dem Bildblock zugeordneten Bewegungsvektor in seine x- und y-Komponente $V11_x$, V11y zu unterteilen und die Bildblöcke zu ermitteln, durch welche diese Vektorkomponenten bzw. Teilvektoren verlaufen. In dem Beispiel gemäß Figur 3 verläuft die x-Komponente $V11_x$ außer durch den Bildblock 11 selbst durch die Bildblöcke 19, 20. Die y-Komponente $V11_y$, verläuft außer durch den Bildblock 11 selbst durch die Bildblöcke 15, 16, 17, 18.

Die x-Komponente $V11'_x$ des modifizierten Bewegungsvektors V11' wird bei diesem Verfahren als Funktion der x-Komponenten, also abhängig von den x-Komponenten, der Bewegungsvektoren der Blöcke, durch welche die x-Komponente $V11_x$ des Bewegungsvektors V11 verläuft, erzeugt. Die y-Komponente V11'y des modifizierten Bewegungsvektors V11' wird bei diesem Verfahren als Funktion der y-Komponenten, also abhängig von den y-Komponenten, der Bewegungsvektoren der Blöcke, durch welche die y-Komponente V11y des Bewegungsvektors V11 verläuft, erzeugt. Für das Beispiel in Figur 2 gilt also:

$$V11'_x = f(V11_x, V15_x, V16_x, V17_x, V18_x) \quad (5a)$$

$$V11'_y = f(V11_y, V19_y, V20_y) \quad (5b).$$

Die zuletzt erläuterte Vorgehensweise kann auch dahingehend interpretiert werden, dass jedem Bildblock zwei zueinander orthogonale Bewegungsvektoren, in dem Beispiel $V11_x$, $V11_y$, zugeordnet werden und dass zu jedem Bildblock zwei zueinander orthogonale Bewegungsvektoren ermittelt werden. Hierzu werden für jeden der Bewegungsvektoren eines Bildblockes die durch diesen überstrichenen Bildblöcke ermittelt und die Bewegungsvektoren der überstrichenen Bildblöcke, die zu dem jeweiligen überstreichenden Bewegungsvektor nicht orthogonal sind, werden gefiltert.

Als Filterung zur Erzeugung des modifizierten Bewegungsvektors aus den Bewegungsvektoren der weiteren Bildblöcke eignet sich insbesondere eine einen Tiefpasscharakter besitzende Filterung. Als Filterung ist insbesondere auch eine Medianfilterung geeignet.

Der durch das erfindungemäße Verfahren erzeugte modifizierte Bewegungsvektor weicht nur dann von dem dem Bildblock zunächst zugeordneten Bewegungsvektor ab, wenn der Bildblock als bewegt gilt, wenn der dem Bildblock zugeordnete Bewegungsvektor also über die Grenzen des Bildblockes hinausreicht, und wenn die Bewegungsvektoren der Anfang- und End-Bildblöcke des Bewegungsvektors sich von dem Bewegungsvektor des betrachteten Bildblocks unterscheiden. Bildblöcke, die mittels des zunächst durchgeführten Bewegungsschätzverfahrens als "unbewegte" Bildblöcke ermittelt wurden, sind auch nach Durchführung des erfindungsgemäßen Filterverfahrens unbewegte Bildblöcke, da deren Bewegungsvektoren durch das erfindungsgemäße Verfahren nicht modifiziert werden.

Auch die Bewegungsvektoren von Bildblöcken, die Teil eines mehrere Bildblöcke umfassenden, sich gleichmäßig bewegenden Bildbereiches sind, werden durch das erläuterte Filterverfahren nicht beeinflusst. Denn, in einem solchen homogenen, sich gleichmäßig bewegenden Bereich, in dem benachbarte Bildblöcke gleiche Bewegungsvektoren besitzen, sind auch den Anfangs-und End-Bildblöcken der Bewegungsvektoren die gleichen Bewegungsvektoren zugeordnet, so dass das erläuterte Filterverfahren - insbesondere ein Tiefpassverfahren - zu demselben Bewegungsvektor führt, der den einzelnen Bildblöcken bereits zugeordnet ist.

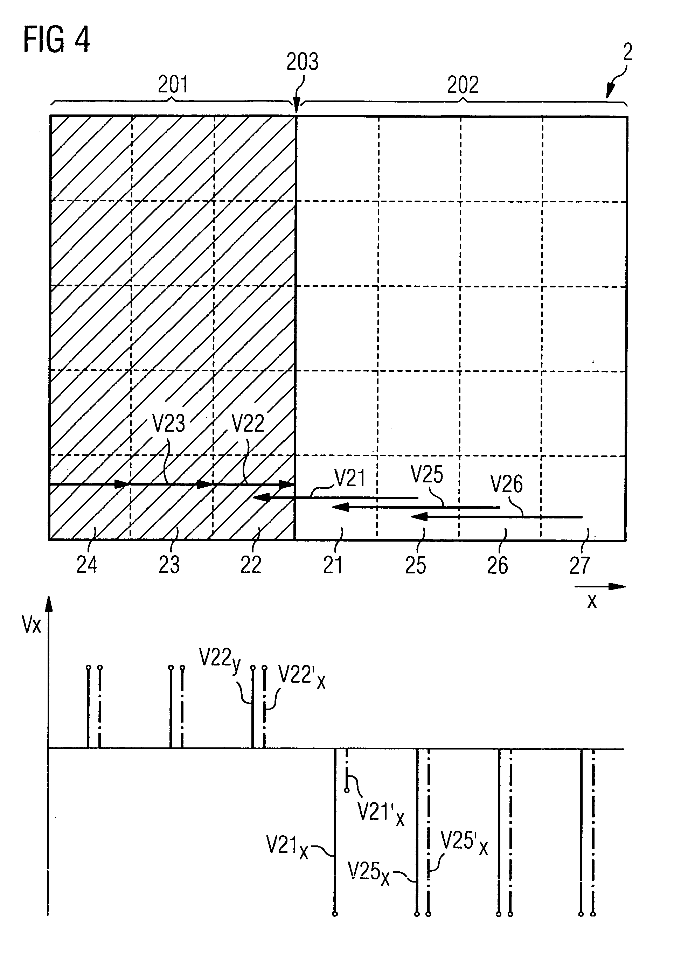

Das erläuterte Verfahren kann jedoch zu einer Modifizierung der Bewegungsvektoren von solchen Bildblöcken führen, die sich an der Grenze zwischen solchen Bildbereichen liegen, die sich unterschiedlich bewegen, wie nachfolgend anhand von Figur 4 erläutert wird.

Figur 4 zeigt einen Ausschnitt eines in Bildblöcke aufgeteilten Bildes 2, das zwei sich gegenläufig bewegende Bildabschnitte 201, 202 aufweist. Diese beiden Bildbereiche 201, 202 sind in dem Beispiel in horizontaler Richtung benachbart zueinander angeordnet, so dass eine Grenze bzw. Kante 203 zwischen diesen beiden Bildabschnitten 201, 202 in einer vertikalen Richtung verläuft.

Zu Zwecken der Erläuterung sei angenommen, dass sich der Bildbereich 201 in horizontaler Richtung bzw. x-Richtung des Bildes 2 bewegt, und dass sich der Bildbereich 202 in einer zu dem Bildbereich 201 entgegengesetzten Richtung bewegt. Den einzelnen Bildblöcken des ersten Bildbereiches 201 sind dabei jeweils gleiche Bewegungsvektoren zugeordnet, die in dem Beispiel lediglich eine x-Komponente besitzen. Entsprechend sind den Bildblöcken des zweiten Bildbereichs 202 ebenfalls jeweils gleiche Bewegungsvektoren zugeordnet, die in dem Beispiel ebenfalls nur eine x-Komponente besitzen.

Im Weiteren seien eine Anzahl Bildblöcke 21-27 betrachtet, die in horizontaler Richtung in dem Bild 2 nebeneinander liegen. Die Kante 203 zwischen den beiden Bildbereichen 201, 202 verläuft dabei zwischen den Bildblöcken 21, 22. In Figur 4 sind unterhalb der betrachteten Bildblöcke 21-27 die Beträge der Bewegungsvektoren der einzelnen Bildblöcke in einem Diagramm in durchgezogenen Linien aufgetragen. In dem Beispiel wird angenommen, dass die "Geschwindigkeit" mit welcher sich der erste Bereich 201 bewegt, geringer ist als die Geschwindigkeit des Bildbereiches 203, dass die Beträge der Bewegungsvektoren der Bildblöcke 22, 23, 24 des ersten Bildbereiches 201 also geringer sind, als die Beträge der Bewegungsvektoren der Bildblöcke 21, 25, 26, 27 des zweiten Bildbereichs 202.

Als strichpunktierte Linien sind in Figur 4 die Beträge modifizierter Bewegungsvektoren der Bildblöcke 21-27 dargestellt. Diese modifizierten Bewegungsvektoren sind in dem Beispiel durch Bildung der Mittelwerte der Anfang- und End-Bildblöcke erzeugt. So ergibt sich der modifizierte Bewegungsvektor V21' des Bildblocks 21, der an der Grenze 203 zwischen den sich gegenläufig bewegenden Bereichen 201, 202 liegt, als Mittelwert der Bewegungsvektoren V25, V22 des Anfangs-Bildblocks 25 und des End-Bildblocks 22. Die Bewegungsvektoren V25, V22 der Anfangs- und End-Bildblöcke unterscheiden sich und verlaufen in gegenläufige Richtungen, so dass der modifizierte Bewegungsvektor V21', der in dem Beispiel mit seiner x-Komponente $V21'_x$ identisch ist, von dem ursprünglich zugeordneten Bewegungsvektor V21 abweicht. Die modifizierten Bewegungsvektoren der übrigen Bildblöcke 25, 26, 27 des zweiten Bildbereichs 202 entsprechen den ursprünglichen Bewegungsvektoren, da die Bewegungsvektoren der Anfangs- und End-Bildblöcke den in diesen Bereichen ursprünglich zugeordneten Bewegungsvektoren entsprechen. Für den Bildblock 25 bildet der benachbarte Bildblock 26 den Anfangs-Bildblock und der weitere benachbarte Bildblock 21 den End-Bildblock. Die Bewegungsvektoren V21, V26 dieser Bildblöcke entsprechen dem Bewegungsvektor V25 des Bildblocks 25.

Die modifizierten Bewegungsvektoren der Bildblöcke 22, 23, 24 des ersten Bildbereiches 201 entsprechen in dem Beispiel den modifizierten Bewegungsvektoren, da diese Bewegungsvektoren in dem Beispiel nicht über die jeweiligen Bildblöcke hinaus reichen.

Wie dem anhand von Figur 4 erläuterten Beispiel zu entnehmen ist, kann das erläuterte Filterverfahren zu einer Modifizierung der Bewegungsvektoren von solchen Bildblöcken führen, die an der Grenze sich unterschiedlich bewegender Bildbereiche liegen. Als Filterverfahren zur Erzeugung der modifizierten Bewegungsvektoren wird vorzugsweise ein Tiefpassfilterverfahren, wie beispielsweise eine einfache Mittelwertbildung, angewendet, was dazu führt, dass der modifizierte Bewegungsvektor an die Bewegungsvektoren der Bildblöcke angepasst wird, die in der Bewegungsrichtung benachbart zu dem betrachteten Bildblock liegen. In dem in Figur 4 erläuterten Beispiel, bei dem die in der Bewegungsrichtung benachbart zu dem Bildblock 21 liegenden Bildblöcke 22, 25 Bewegungsvektoren besitzen, die zum Einen unterschiedlich lang sind und die zum Anderen entgegengesetzte Richtungen besitzen, ist der modifizierte Bewegungsvektor V21' deutlich kürzer als der ursprüngliche Bewegungsvektor V21.

Unter der Annahme, dass die ursprünglich durchgeführte Bewegungsschätzung, die zur Zuweisung der ursprünglichen Bewegungsvektoren zu den Bildblöcken 21, 27 geführt hat, fehlerfrei war, führt die Erzeugung des modifizierten Bewegungsvektors, die eine Verkürzung des Bewegungsvektors des Bildblocks 21 zur Folge hat, zu einem Fehler. Herkömmliche Bewegungsschätzverfahren sind jedoch häufig gerade für solche Bildbereiche, in denen Grenzen sich unterschiedlich bewegender Bereiche verlaufen, fehlerbehaftet. Gerade an Grenzen solcher sich unterschiedlich bewegender Bereiche wirkt sich eine fehlerhafte Bewegungsschätzung besonders negativ auf die Qualität des dargestellten Bildes aus. Geht man von einer solchen fehlerhaften Bewegungsschätzung aus, so führt das erfindungsgemäße Verfahren in solchen Bildbereichen, in denen die Bewegungsvektoren benachbarter Bildblöcke stark voneinander abweichen, bei Anwendung einer Tiefpassfilterung zu einer Anpassung der Bewegungsvektoren benachbarter Bildblöcke und damit zu einer deutlichen Verbesserung des subjektiven Seheindrucks.

Das erläuterte Verfahren wirkt sich insbesondere auf solche Bildblöcke aus, für die ursprünglich eine "hohe Geschwindigkeit" ermittelt wurde, denen also Bewegungsvektoren zugeordnet wurden, die deutlich über die Grenzen des betrachteten Bildblocks hinausreichen. Bildblöcke mit ursprünglich niedriger Geschwindigkeit oder gar unbewegte Bildblöcke werden hingegen nicht modifiziert, da bei diesen Bildblöcken der Anfangspunkt und der Endpunkt des Bewegungsvektors innerhalb des betrachteten Bildblocks liegt.

Bei dem erläuterten Verfahren erfolgt eine Filterung zur Erzeugung der modifizierten Bewegungsvektoren grundsätzlich nur in Bewegungsrichtung. Vektorfeldkomponenten, orthogonal zur Bewegungsrichtung werden durch dieses Verfahren nicht beeinflusst, wie nachfolgend erläutert wird:

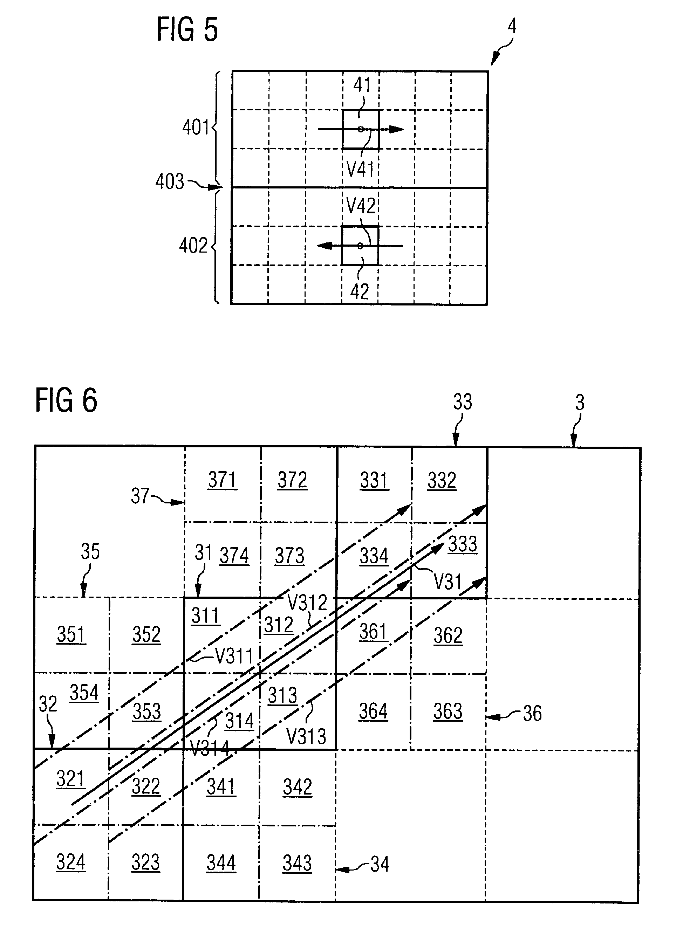

Figur 5 zeigt einen Ausschnitt eines in Bildblöcke unterteilten Bildes 4, das zwei sich unterschiedlich bewegende Bildbereiche 401, 402 aufweist, die sich entgegengesetzt jedoch parallel aneinander vorbeibewegen. Ein oberer Bildbereich 401 bewegt sich in dem Beispiel von links nach rechts, während sich ein unterer Bildbereich 402 von rechts nach links bewegt. Den einzelnen Bildblöcken dieser beiden Bildbereiche 401, 402 sind jeweils gleiche Bewegungsvektoren zugeordnet. Stellvertretend für die Bildblöcke des ersten Bildbereiches 401 ist in Figur 5 ein Bildblock 41 dargestellt, dem ein Bewegungsvektor V41 zugeordnet ist. Stellvertretend für die Bildblöcke des zweiten Bildbereichs 402 ist in Figur 5 ein weiterer Bildblock 42 dargestellt, dem ein Bewegungsvektor V42 zugeordnet ist. Die Bewegungsvektoren der beiden Bildblöcke 41, 42 verlaufen dabei entgegengesetzt zueinander. Eine Nahtstelle zwischen den zwei sich entgegengesetzt bewegenden Bereichen 401, 402 ist in Figur 5 mit dem Bezugszeichen 403 bezeichnet.

Bei der Erzeugung modifizierter Bewegungsvektoren zu den einzelnen Bildblöcken unter Anwendung der zuvor erläuterten Verfahrensschritte erfolgt eine Filterung der Bewegungsvektoren der einzelnen Bildblöcke dieser beiden Bildbereiche 401, 402 in Bewegungsrichtung, also im vorliegenden Fall in horizontaler Richtung. Eine "Vermischung" der Bewegungsvektoren der beiden sich entgegengesetzt bewegenden Bereiche 401, 402 wird bei dem erfindungsgemäßen Filterverfahren vermieden.

Das erläuterte Filterverfahren ist auch auf eine Erhöhung der Auflösung bei der Bewegungsschätzung anwendbar, wie nachfolgend anhand von Figur 6 erläutert wird.

Figur 6 zeigt einen Ausschnitt eines in Bildblöcke unterteilten Bildes 3. Jeder dieser Bildblöcke, die nachfolgend auch als Hauptblöcke bezeichnet werden, umfasst dabei in nicht näher dargestellter Weise eine gleiche Anzahl zusammenhängender Bildpunkte. Bei der Bewegungsschätzung ist es grundsätzlich wünschenswert, die Größe der einzelnen Bildblöcke, denen jeweils ein Bewegungsvektor zugeordnet ist, möglichst klein zu wählen, um dadurch auch sehr kleine sich bewegende Objekte bewegungsrichtig darstellen zu können. Allerdings steigt der Aufwand der Bewegungsschätzung mit kleiner werdenden Bildblöcken.

Mit dem Bezugszeichen 31 ist in Figur 6 ein erster Bildblock bezeichnet, dem ein erster Bewegungsvektor V31 zugeordnet ist. Dieser Bewegungsvektor V31 des Bildblocks 31 kann ein mittels eines herkömmlichen Verfahrens ermittelter Bewegungsvektor oder ein mittels des zuvor erläuterten Verfahrens erzeugter modifizierter Bewegungsvektor sein.

Zur Erhöhung der Auflösung bei der Bewegungsschätzung ist vorgesehen, diesen Hauptblock 31 in kleinere Unterblöcke zu unterteilen. In dem Beispiel wird der Bildblock 31 in vier jeweils gleichgroße Unterblöcke unterteilt, die mit den Bezugszeichen 311-314 bezeichnet sind. Jedem dieser Unterblöcke 311-314 wird zunächst ein Bewegungsvektor V311-V314 zugeordnet, der dem Bewegungsvektor V31 des ersten Hauptblocks 31 entspricht. Eine entsprechende Unterteilung in Unterblöcke wird auch für die übrigen Bildblöcke des Bildes 3 vorgenommen, wobei eine solche Unterteilung in Figur 6 aus Gründen der Übersichtlichkeit lediglich für Bildblöcke 32, 33, 34, 35, 36 und 37 dargestellt ist.

Zu jedem der durch Unterteilung der ursprünglichen Bildblöcke erhaltenen Unterblöcke wird ein modifizierter Bewegungsvektor ermittelt, was nachfolgend für einen ersten Unterblock 311, der sich in der oberen linken Ecke des Bildblocks 31 befindet, erläutert wird.

Zu dem diesem ersten Unterblock 311 zunächst zugeordneten Bewegungsvektor V311, der in Betrag und Richtung dem Bewegungsvektor V31 des ersten Bildblocks 31 entspricht, werden zunächst die Unterblöcke ermittelt, die dieser Bewegungsvektor wenigstens teilweise durchläuft. Dieser Bewegungsvektor beginnt in dem Beispiel in einem Unterblock 321 des Bildblocks 32 und erstreckt sich durch die Unterblöcke 354, 353, 352 des Blockes 35, den ersten Unterblock 311, den weiteren Unterblock 312 des Blockes 31, den Unterblock 373 des Blockes 37 und den Unterblock 334 des Blockes 33 bis zu dem Unterblock 331 des Blockes 33. Diesen einzelnen Unterblöcken sind jeweils Bewegungsvektoren zugeordnet, die den Vektoren entsprechen, die den zugehörigen Hauptblöcken zugeordnet sind. Ein modifizierter Bewegungsvektor V311' zu dem Bewegungsvektor V311 wird als Funktion der Bewegungsvektoren, durch die der Vektor V311 wenigstens teilweise verläuft, erzeugt. Für das dargestellte Beispiel gilt also:

$$V311' = f(V321, V354, V353, V352, V311, V312, V373, V334, V331) \tag{6}$$

Bei einer Alternative des Verfahrens ist vorgesehen, zur Ermittlung des modifizierten Bewegungsvektors V311' zu einem Unterblock nur die Hauptblöcke zu betrachten, welche der dem Unterblock zugeordnete Bewegungsvektor durchläuft. In diesem Fall gilt für den modifizierten Bewegungsvektor V311':

$$V311' = f(V32, V35, V31, V37, V33) \tag{7}$$

Die Ermittlung des modifizierten Bewegungsvektors V311' kann bezugnehmend auf die Ausführungen zu den Figuren 2 und 3 und die Gleichungen (4a), (4b) sowie (5a), (5b) selbstverständlich in der erläuterten Weise komponentenweise erfolgen.

Als Filterfunktion f(.) eignet sich auch bei diesem Verfahren eine Filterfunktion mit Tiefpasscharakter, insbesondere eine Mittelwertbildung, oder auch eine statistische Filterung, beispielsweise eine Medianfilterung.

Das erläuterte Verfahren kann zu unterschiedlichen modifizierten Bewegungsvektoren für die einzelnen Unterblöcke eines Bildblockes führen, was aus Figur 6 bei Betrachtung eines zweiten Unterblocks 313 ersichtlich ist, der in der rechten unteren Ecke des Bildblocks 31 angeordnet ist. Der diesem zweiten Unterblock 313 zunächst zugeordnete Bewegungsvektor V313 entspricht bezüglich Betrag und Richtung zwar dem Vektor des ersten Unterblocks 311. Wegen des räumlichen Versatzes dieser beiden Unterblöcke 311, 313 verläuft der Bewegungsvektor V313 des zweiten Unterblocks 313 allerdings durch Unterblöcke und auch durch Hauptblöcke, welche der Bewegungsvektor V311 des ersten Unterblocks nicht durchläuft. Hierdurch können andere Bewegungsvektoren bei der Erzeugung des modifizierten Bewegungsvektors V313' berücksichtigt werden, was zu einem anderen Ergebnis als für den modifizierten Bewegungsvektor V311' des ersten Unterblocks 311 führen kann.

Zur weiteren Erhöhung der Auflösung lässt sich das erläuterte Verfahren mehrmals durchführen. So besteht die Möglichkeit, die einzelnen Unterblöcke weiter in kleinere Unterblöcke zu unterteilen und anhand der erläuterten Verfahren modifizierte Bewegungsvektoren zu diesen weiteren Unterblöcken zu erzeugen.

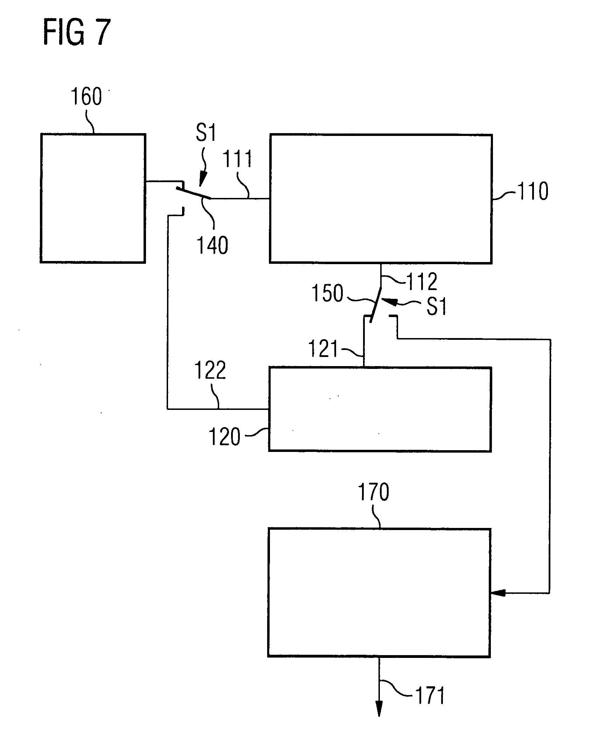

Eine Vorrichtung zur Durchführung des erfindungsgemäßen Verfahrens ist schematisch in Figur 7 dargestellt. Diese Vorrichtung umfasst einen Bewegungsvektorspeicher 110, in dem die Bewegungsvektoren aller Bildblöcke eines Bildes oder Bildausschnittes abgespeichert sind. Der Vektorspeicher 110 weist einen Adresseingang 111 und einen Datenausgang 112 auf. Über den Adresseingang 111 sind dem Speicher 110 Adressdaten zuführbar. Wird an den Adresseingang 111 ein Adressdatum angelegt, das einem Bildblock zugeordnet ist, so gibt der Vektorspeicher 110 an dem Datenausgang 112 die Vektordaten des Bewegungsvektors aus, die diesem Bildblock zugeordnet sind.

Eine Auswerteeinheit 120 ist dazu ausgebildet, anhand von Bewegungsvektordaten eines Bewegungsvektors wenigstens Anfangs-und End-Bildblöcke dieses Bewegungsvektors zu ermitteln und an einem Adressausgang 122 Adressdaten dieser Bildblöcke auszugeben. Die Auswerteeinheit 120 kann auch dazu ausgebildet sein, neben den Anfangs- und End-Bildblöcken weitere Bildblöcke zu ermitteln, durch die der jeweils betrachtete Bewegungsvektor verläuft.

Dem Adresseingang 111 des Vektorspeichers 110 ist eine erste Umschalteinrichtung 140 vorgeschaltet und dem Datenausgang 112 des Vektorspeichers 110 ist eine zweite Umschalteinrichtung 150 nachgeschaltet. Die erste Umschalteinrichtung 140 dient dazu, dem Adresseingang 111 wahlweise ein von einer Adressiereinrichtung 160 geliefertes Adressdatum oder die von der Auswahleinheit 120 bereitgestellten Adressdaten zuzuführen. Die Ansteuerung der beiden Umschalteinrichtungen 140, 150 erfolgt nach Maßgabe eines von einer nicht näher dargestellten Steuereinrichtung gelieferten Steuersignals S1.

Zu Beginn der Verfahrensschritte zur Erzeugung eines modifizierten Bewegungsvektor wird dem Vektorspeicher 110 über die Umschalteinrichtung 140 von der Adressiereinrichtung 160 das Adressdatum des Bildblocks zugeführt, zu welchem der modifizierte Bewegungsvektor erzeugt werden soll. Die von dem Vektorspeicher 110 zu diesem Bildblock gelieferten Vektordaten werden über die Umschalteinrichtung 150 dann der Auswerteeinheit 120 zugeführt. Nachdem dem Vektorspeicher 110 von der Adressiereinrichtung 160 die Adressdaten des jeweiligen Bildblocks zugeführt wurden und nachdem in der Auswerteeinrichtung 120 die Vektordaten des zugehörigen Bewegungsvektors ermittelt wurden, werden die beiden Umschalteinrichtungen 140, 150 umgeschaltet. Dem Vektorspeicher 110 werden daraufhin von der Auswerteeinheit 120 die Adressdaten wenigstens der Anfang- und End-Bildblöcke des zuvor ermittelten Bewegungsvektors zugeführt. Die Vektordaten der Bewegungsvektoren wenigstens dieser Anfang- und End-Bildblöcke werden dann über die zweite Umschalteinrichtung 150 einem Vektorfilter 170 zugeführt, welches anhand der Vektordaten wenigstens der Anfang-und End-Bildblöcke den modifizierten Bewegungsvektor ermittelt. Dieses Vektorfilter 170 ist beispielsweise als Tiefpassfilter ausgebildet und stellt an einem Ausgang 171 die Vektordaten des modifizierten Bewegungsvektors zur Verfügung.

Die Vektordaten der zu filternden Bewegungsvektoren werden dem Filter 170 beispielsweise seriell von dem Vektorspeicher 110 zugeführt. Das Filter ist in diesem Fall dazu ausgebildet, die seriell eingehenden Vektordaten zur Erzeugung des modifizierten Bewegungsvektors zu filtern.

Nach Erzeugung des modifizierten Bewegungsvektors werden die beiden Umschalteinrichtungen 140, 150 wieder umgeschaltet, um dem Vektorspeicher 110 über die Adressiereinrichtung 160 die Adressdaten eines weiteren Bildblocks zuzuführen und um die erläuterten Verfahrensschritte für diesen weiteren Bildblock erneut durchzuführen.

Bezugszeichenliste

S1          Steuersignal

| | |
|---|---|
| V11-V21 | Bewegungsvektoren |
| $V11_x$ | x-Komponente des Bewegungsvektors V11 |
| $V11_y$ | y-Komponente des Bewegungsvektor V11 |
| V21-V23 | Bewegungsvektoren |
| V25, V26 | Bewegungsvektoren |
| V311-V314 | Bewegungsvektoren |
| V31-V33 | Bewegungsvektoren |
| V323, V333 | Bewegungsvektoren |
| V41, V42 | Bewegungsvektoren |
| 1 | Bild, Bildausschnitt |
| 2 | Bild, Bildausschnitt |
| 3 | Bild, Bildausschnitt |
| 4 | Bild, Bildausschnitt |
| 11-21 | Bildblöcke |
| 21-27 | Bildblöcke |
| 31-33 | Bildblöcke |
| 41, 42 | Bildblöcke |
| 110 | Vektorspeicher |
| 111 | Adresseingang des Vektorspeichers |
| 112 | Datenausgang des Vektorspeichers |
| 120 | Auswerteeinheit |
| 121 | Dateneingang der Auswerteeinheit |
| 122 | Adressausgang der Auswerteeinheit |
| 140, 150 | Umschalteinrichtung |
| 160 | Adressiereinrichtung |
| 170 | Vektorfilter |
| 171 | Ausgang des Vektorfilters |
| 203 | Grenze zwischen Bildbereichen |
| 201, 202 | Bildbereiche |
| 311-313 | Unterblöcke des Bildblocks 31 |
| 321-324 | Unterblöcke des Bildblocks 32 |
| 331-334 | Unterblöcke des Bildblocks 33 |
| 401, 402 | Bildbereiche |
| 403 | Grenze zwischen Bildbereichen |

**Patentansprüche**

1. Verfahren zur Ermittlung von Bewegungsvektoren, die einzelnen Bildbereichen eines Bildes zugeordnet sind, wobei das Bild in eine Anzahl Bildblöcke unterteilt und ein Bewegungsschätzverfahren durchgeführt wird, um jedem der Bildblöcke wenigstens einen Bewegungsvektor zuzuordnen,
**dadurch gekennzeichnet, dass**
ein modifizierter Bewegungsvektor (V11') zu wenigstens einem ersten Bildblock (11) unter Verwendung folgender Schritte erzeugt wird:

- Ermitteln wenigstens eines zweiten Bildblocks (12, 13), durch den der dem ersten Bildblock (11) zugeordnete Bewegungsvektor (V11) wenigstens teilweise verläuft,
- Erzeugen des modifizierten Bewegungsvektors (V11') abhängig von dem wenigstens einem zweiten Bildblock (12, 13) zugeordneten Bewegungsvektor (V12, V13),
- Zuordnen des modifizierten Bewegungsvektors (V11') als Bewegungsvektor zu dem ersten Bildblock (11).

2. Verfahren nach Anspruch 1, bei dem ein an einem Anfangspunkt des dem ersten Bildblock (11) zugeordneten Bewegungsvektors (V11) liegender Anfangs-Bildblock (12) und ein an einem Endpunkt des Bewegungsvektors (V11) liegender End-Bildblock (13), ermittelt wird und bei dem der modifizierte Bewegungsvektor abhängig von einem Bewegungsvektor (V12) des Anfangs-Bildblocks (12) und einem Bewegungsvektor (V13) des End-Bildblocks (13) ermittelt wird.

3. Verfahren nach Anspruch 2, bei dem zur Erzeugung des modifizierten Bewegungsvektors (V11') der Mittelwert der Bewegungsvektoren (V12, V13) des Anfangs- und End-Bildblocks (12, 13) gebildet wird.

4. Verfahren nach Anspruch 1, bei dem alle Bildblöcke ermittelt werden, durch die der dem ersten Bildblock (11) zugeordnete Bewegungsvektor (V12) wenigstens teilweise verläuft und bei dem der modifizierte Bewegungsvektor (V11') abhängig von den Bewegungsvektoren dieser Bildblöcke ermittelt wird.

5. Verfahren nach Anspruch 4, bei dem die Bewegungsvektoren der überstrichenen Blöcke einer Tiefpassfilterung unterzogen werden, um den modifizierten Bewegungsvektor zu erzeugen.

6. Verfahren nach einem der vorangehenden Ansprüche bei dem der modifizierte Bewegungsvektor (V11') auch abhängig von dem Bewegungsvektor (V11) des ersten Bildblockes (11) erzeugt wird.

7. Verfahren nach einem der vorangehenden Ansprüche, bei dem dem ersten Bildblock (11) zwei zueinander orthogonale Bewegungsvektoren, nämlich ein vertikaler Bewegungsvektor (V11y) und ein horizontaler Bewegungsvektor (V11$_x$) zugeordnet sind, und bei dem zu dem Bildblock (11) ein modifizierter vertikaler Bewegungsvektor (V11'y; V11''y) und ein modifizierter horizontaler Bewegungsvektor (V11'$_x$; V11"$_x$) erzeugt wird.

8. Verfahren nach Anspruch 7, bei dem zur Erzeugung des modifizierten vertikalen Bewegungsvektors (V11"y) folgende Verfahrensschritte durchgeführt werden:

   - Ermitteln wenigstens eines weiteren Bildblocks (19, 20), den der vertikale Bewegungsvektor (V11$_y$) des ersten Bildblocks (11) wenigstens teilweise durchläuft, und dem ein vertikaler und ein horizontaler Bewegungsvektor zugeordnet ist,
   - Erzeugen des modifizierten vertikalen Bewegungsvektors (V11"$_y$) abhängig von dem vertikalen Bewegungsvektor wenigstens eines weiteren Bildblocks.

9. Verfahren nach Anspruch 7, bei dem zur Erzeugung des modifizierten horizontalen Bewegungsvektors (V11"$_x$) folgende Verfahrensschritte durchgeführt werden:

   - Ermitteln wenigstens eines weiteren Bildblocks (15, 16, 17,18), den der horizontale Bewegungsvektor (V11$_x$) des ersten Bildblocks (11) wenigstens teilweise durchläuft, und dem ein vertikaler und ein horizontaler Bewegungsvektor zugeordnet ist,
   - Erzeugen des modifizierten horizontalen Bewegungsvektors (V11"x) abhängig von dem horizontalen Bewegungsvektor wenigstens eines weiteren Bildblocks.

10. Verfahren nach einem der vorangehenden Verfahrensschritte, das folgende weitere Verfahrensschritte umfasst:

   - Unterteilen der Bildblöcke (31, 32, 33) des Bildes (3) in Unterblöcke (311-314, 321-324, 331-334) und Zuordnen der den Bildblöcken (31, 32, 33) zugeordneten modifizierten Bewegungsvektoren zu den einzelnen Unterblöcken (311-314) als Bewegungsvektoren (V311-V314),
   - für wenigstens einen ersten (313) der Unterblöcke: Ermitteln wenigstens eines zweiten Unterblocks, den der Bewegungsvektor des ersten Unterblocks (313) überstreicht und Erzeugen eines modifizierten Bewegungsvektors abhängig von dem dem zweiten Unterblock (333) zugeordneten Bewegungsvektor (V333).

11. Verfahren zur Ermittlung von Bewegungsvektoren, die einzelnen Bildbereichen eines Bildes (3) zugeordnet sind, bei dem das Bild (3) in eine Anzahl Bildblöcke (31) unterteilt und ein Bewegungsschätzverfahren durchgeführt wird, um zu jedem der Bildblöcke (31) wenigstens einen Bewegungsvektor (V31, V32, V33) zur Verfügung zu stellen, und das folgende Verfahrensschritte aufweist:

   - Unterteilen der Bildblöcke (31) des Bildes (3) in Unterblöcke (311-314) und Zuordnen der den Bildblöcken (31) zugeordneten Bewegungsvektoren (V31) den einzelnen Unterblöcken (311-314) als Bewegungsvektoren (V311-V314),
   - für wenigstens einen ersten (311) der Unterblöcke: Ermitteln wenigstens eines zweiten Unterblocks, durch den der Bewegungsvektor (V311) des ersten Unterblocks wenigstens teilweise durchläuft und Erzeugen eines modifizierten Bewegungsvektors abhängig von dem dem wenigstens einen zweiten Unterblock zugeordneten Bewegungsvektor,
   - Zuordnen des modifizierten Bewegungsvektors als Bewegungsvektor zu dem ersten Unterblock (311).

**12.** Verfahren nach Anspruch 11, bei dem zu dem ersten Unterblock die Bildblöcke oder die Unterblöcke ermittelt werden, die wenigstens teilweise durch den dem ersten Unterblock zugeordneten Bewegungsvektor überstrichen werden und bei dem der modifizierte Bewegungsvektor abhängig von den Bewegungsvektoren der überstrichenen Unterblöcke oder Hauptblöcke erzeugt wird.

**13.** Verfahren nach Anspruch 12, bei dem die Bewegungsvektoren der überstrichenen Unterblöcke oder Hauptblöcke einer Tiefpassfilterung unterzogen werden.

**14.** Verfahren nach Anspruch 12, bei dem die Bewegungsvektoren der überstrichenen Unterblöcke oder Hauptblöcke einer nichtlinearen Filterung unterzogen werden.

**15.** Verfahren nach Anspruch 14, bei dem die nicht-lineare Filterung eine statistische Filterung ist.

**16.** Vorrichtung zur Erzeugung eines Bewegungsvektors zu einem Bildblock eines Bildes, die folgende Merkmale aufweist:

- einen Vektorspeicher (110) zur Speicherung von Bewegungsvektoren, die einzelnen Bildblöcken eines Bildes zugeordnet sind, der einen Adressiereingang (111) und einen Datenausgang (112) aufweist,
- eine Auswerteeinheit (120), die einen Dateneingang (121) und einen Adressausgang (122) aufweist, deren Dateneingang (121) wahlweise an den Datenausgang (112) des Vektorspeichers (110) und deren Adressausgang (122) wahlweise an der Adresseingang (111) des Vektorspeichers anschließbar ist und die dazu ausgebildet ist, zu einem Bewegungsvektor eines Bildblocks wenigstens die Adresse eines Bewegungsvektors eines Anfangs-Bildblocks und eines End-Bildblocks zu dem gegebenen Bewegungsvektor in dem Vektorspeicher zur Verfügung zu stellen,
- ein Vektorfilter (170), das wahlweise an den Datenausgang (112) des Vektorspeichers (110) anschließbar:

**17.** Vorrichtung nach Anspruch 16, bei der das Vektorfilter ein Tiefpassfilter ist.

**18.** Vorrichtung nach Anspruch 16 oder 17, bei der eine Adressiereinrichtung (160) vorhanden ist, die wahlweise an den Adresseingang (111) des Vektorspeichers (110) anschließbar ist.

**19.** Vorrichtung nach einem der Ansprüche 16 bis 18, bei der eine erste Umschalteinrichtung (140) zwischen die Adressiereinrichtung (160), den Adressausgang der Auswerteeinheit (120) und den Adresseingang (111) des Vektorspeichers (110) geschaltet ist.

**20.** Vorrichtung nach einem der Ansprüche 16 bis 19, bei der eine zweite Umschalteinrichtung (150) zwischen den Datenausgang (112) des Vektorspeichers (110), den Dateneingang (121) der Auswerteeinheit (120) und das Vektorfilter (170) geschaltet ist.

# FIG 1

$P(K-\frac{1}{2})$

$P(K)$

152

$P(K+\frac{1}{2})$

152

154

V154

V51

53

51

151

V51

EP 1 729 258 A2

FIG 2

FIG 3

## FIG 4

## FIG 5

## FIG 6

## FIG 7

**IN DER BESCHREIBUNG AUFGEFÜHRTE DOKUMENTE**

**In der Beschreibung aufgeführte Patentdokumente**

- US 6782054 B

- US 5148269 A

**In der Beschreibung aufgeführte Nicht-Patentliteratur**

- **SCHRÖDER, H. ; BLUME, H.** Mehrdimensionale Signalverarbeitung. vol. 2, 259-266

- **SCHRÖDER, H. ; BLUME, H.** Mehrdimensionale Signalverarbeitung. vol. 2, 266-289